# EUROPÄISCHE PATENTSCHRIFT

(11) **EP 1 828 816 B1**
(45) Veröffentlichungstag und Bekanntmachung des Hinweises auf die Patenterteilung: **20.11.2013**
(21) Anmeldenummer: 05848991.5
(22) Anmeldetag: 19.12.2005
(51) Int. Cl.: G02B 3/00, G02B 6/10, G02B 1/04

(54) **OPTISCHE KOMPONENTE AUS EINEM ANORGANISCH-ORGANISCHEN HYBRIDMATERIAL ZUR HERSTELLUNG VON BRECHZAHLGRADIENTENSCHICHTEN MIT SCHNELLER KINETIK UND VERFAHREN ZU IHRER HERSTELLUNG**
OPTICAL COMPONENTS MADE FROM AN INORGANIC/ORGANIC HYBRID MATERIAL FOR THE PRODUCTION OF REFRACTIVE INDEX GRADIENT LAYERS WITH RAPID KINETICS AND METHOD FOR PRODUCTION THEREOF
COMPOSANTS OPTIQUES CONSTITUES D'UNE MATIÈRE HYBRIDE INORGANIQUE-ORGANIQUE PERMETTANT DE PRODUIRE DES COUCHES A GRADIENT D'INDICE DE RÉFRACTION AVEC UNE CINÉTIQUE PLUS RAPIDE ET PROCÉDÉ POUR LES PRODUIRE.

(30) Priorität: 20.12.2004 DE 102004061324
(43) Veröffentlichungstag der Anmeldung: 05.09.2007
(73) Patentinhaber: EPG (Engineered nanoProducts Germany) AG, 64347 Griesheim (DE)
(72) Erfinder: MENNIG, Martin, 66287 Quierschied (DE); OLIVEIRA, Peter, William, 66111 Saarbrücken (DE)
(74) Vertreter: Meissner, Bolte & Partner
(86) Internationale Anmeldenummer: PCT/EP2005/013683
(87) Internationale Veröffentlichungsnummer: WO 2006/066856

(56) Entgegenhaltungen:
- EP-A- 1 408 352
- US-A- 5 258 024
- US-A- 5 858 526
- US-B1- 6 639 039
- OLIVEIRA P W ET AL: "FABRICATION OF GRIN-LENSES BY CONTACTLESS ELECTROPHORETIC-GRADIENT FORMATION IN TRANSPARENT NANOCOMPOSITES" ORGANIC/INORGANIC HYBRID MATERIALS II. SAN FRANCISCO, CA, APRIL 5 - 9, 1999, MATERIALS RESEARCH SOCIETY SYMPOSIUM PROCEEDINGS. VOL. 576, WARRENDALE, PA : MRS, US, Bd. VOL. 576, 5. April 1999 (1999-04-05), Seiten 421-426, XP000897945 ISBN: 1-55899-483-1

## Beschreibung

Die vorliegende Erfindung betrifft optische Komponenten bzw. Bauteile mit Brechzahlgradienten, deren Verwendung und Verfahren zu deren Herstellung über anorganisch-organische Hybridmaterialien sowie diese Hybridmaterialien.

Es ist bekannt, dass die Diffusion von Monomeren mit gegenüber der umgebenden flüssigen Matrix erhöhtem oder auch erniedrigtem Brechungsindex für die Erzeugung eines Brechzahlgradienten genutzt werden kann, wie es z.B. in US 5,552,261 und US 5,529,473 beschrieben ist. Der bei Photopolymeren bekannte "Colburn-Haines-Effekt" zur gerichteten Diffusion mit anschließender Polymerisierung in den erwärmten bzw. belichteten Bereichen führt zu einer Erhöhung der Dichte und somit zu einer Erhöhung oder Erniedrigung des Brechwertes. Bei organischen Monomeren ist diese Änderung jedoch gering, da die sich einstellende Dichteänderung nur einen geringen Beitrag zur Molrefraktion liefert. Danach wird das Brechzahlgradientenprofil durch Nachvernetzung, beispielsweise über Photopolymerisation, fixiert.

Nachteile dieser Werkstoffe sind relativ niedrige Brechzahlhübe, lange Prozesszeiten und hohe Streuverluste. Aus WO 97/38333 ist bekannt, dass man Brechzahlgradienten auch über die Migration von Nanopartikeln mit hoher oder niedriger Brechzahl in einer flüssigen, photopolymerisierbaren Matrix (Sol) erzeugen und über eine nachträgliche Vernetzung (Polymerisation, Kondensation) fixieren kann. Der wesentliche Nachteil dieses Verfahrens besteht darin, dass man an eine flüssige Matrixphase gebunden ist. Daher ergeben sich Handhabungsprobleme bei der Anwendung von holographischen Techniken oder Maskenbelichtungstechniken.

Hinzu kommt, dass die Brechwertunterschiede in Polymeren auch über den Colburn-Haines-Effekt auf Grund der stofflichen Eigenschaften relativ gering sind. In anderen Arbeiten wird die Diffusion von Nanopartikeln in noch nicht vollständig verdichteten Polymermatrices unter Einfluss von gradientenbildenden Maßnahmen beschrieben, wie z.B. A. Zimmermann et al., Light-Management Films Based on Nanocomposite Coatings, Vortrag 5th Int. Conf. Coatings on Glass, Saarbrücken, 4. bis 8. Juli 2004. Dabei wird die Brechwertdifferenz durch Aufkonzentration von höherbrechenden anorganischen Nanopartikeln erreicht. Nachteil dieses Verfahrens ist, dass die Diffusionsgeschwindigkeit der Partikel im Vergleich zu organischen Monomeren um eine bis mehrere Größenordnungen kleiner ist, und der Prozess zwangsläufig die Anwesenheit von hydrolysierbaren oder hydrolysierten Silanen erfordert. Diese Silanen bedingen eine relativ hohe Feuchtempfindlichkeit der Materialien (z.B. C.J. Brinker, G.W. Scherer "Sol-Gel Science: The Physics and Chemistry of Sol-Gel-Processing, Academic Press 1990).

DE-A-10200648 beschreibt ein Verfahren zur Herstellung von holografischen Folien und Diffusorfolien, bei denen zur Erzeugung von holografischen Strukturen Nanopartikel in Verbindung mit hydrolisierbaren oder hydrolysierten Silanen unabdingbar sind. Diese Verbindungen und ihre Herstellung weisen jeweils die oben genannten Nachteile auf. Die Kondensation der Silane kann auch zu dreidimensionaler Vernetzung und damit zu einer Versprödung des Materials führen.

Der vorliegenden Erfindung lag daher die Aufgabe zugrunde, ein Material zu entwickeln, das in der Lage ist, einen ausreichend hohen Brechzahlgradienten durch Anlegen äußerer Felder bzw. Anwendung von Gradienten bildenden Maßnahmen aufzubauen, und die vorstehend genannten Nachteile nicht aufweist, insbesondere die durch die Silane entstehenden Nachteile, wie zum Beispiel die hohe Feuchtigkeitsempfindlichkeit, bedingt durch den hohen Anteil an nicht vernetzten Rest-OH-Gruppen, und die durch Kondensation der Silane bedingte anorganische dreidimensionale Vernetzung und damit Versprödung des Materials nicht aufweisen.

Es wurde nun überraschenderweise festgestellt, dass diese Aufgabe durch ein eine feste oder viskose Matrix bildendes Polymer, in dem bestimmte Metall-Komplexverbindungen dispergiert oder gelöst sind, erfolgen kann, ohne dass dazu Silane benötigt werden.

Die Erfindung betrifft daher ein anorganisch-organisches Hybridmaterial, umfassend a) ein lösliches, organisches Polymer, b) einen ein- oder mehrkernigen Metallkomplex, der mindestens einen Liganden mit mindestens einer photochemisch oder thermisch polymerisierbaren funktionellen Gruppe aufweist, und c) oberflächenmodifizierte Nanopartikel.

Ferner betrifft die Erfindung ein Verfahren zur Herstellung eines optischen Bauteils, dadurch gekennzeichnet, dass a) ein erfindungsgemäßes anorganisch-organisches Hybridmaterial auf ein Substrat aufgetragen oder in oder auf ein Formwerkzeug gegeben wird, b) das Hybridmaterial gegebenenfalls getrocknet wird, damit es fest oder viskos wird, c) das feste oder viskose Hybridmaterial mustermäßig erwärmt oder bevorzugt mustermäßig bestrahlt wird, um einen Brechzahlgradienten in dem Hybridmaterial zu erzeugen, und d) das Hybridmaterial anschließend thermisch und/oder photochemisch unter Fixierung des Brechzahlgradienten vollständig gehärtet wird.

Das erfindungsgemäße Hybridmaterial kann neben dem löslichen, organischen Polymer, den Nanopartikeln und dem Metallkomplex ferner Lösungsmittel, organische Monomere oder Oligomere, Weichmacher und/oder andere Additive enthalten.

Dementsprechend umfasst das anorganisch-organische Hybridmaterial, bezogen auf das Gesamttrockengewicht, bevorzugt:
a) 4,9 bis 95,9 Gew.-%, vorzugsweise 10 bis 80 Gew.-%, insbesondere 20 bis 40 Gew.-%, eines löslichen Polymers,
b) 0,5 bis 50 Gew.-% eines ein- oder mehrkernigen Metallkomplexes, der mindestens einen Liganden mit mindestens einer photochemisch oder thermisch polymerisierbaren funktionellen Gruppe aufweist,
c) 0,1 bis 30 Gew.-%, vorzugsweise 1 bis 40 Gew.-%, insbesondere 5 bis 30 Gew.-%, oberflächenmodifizierte nanoskalige Teilchen aus der Gruppe der Oxide, Sulfide, Selenide, Telluride, Halogenide, Carbide, Arsenide, Antimonide, Nitride, Phosphide, Carbonate, Carboxylate, Phosphate, Sulfate, Silicate, Titanate, Zirconate, Stannate, Plumbate, Aluminate und entsprechenden Mischoxide und der Metalle,
d) 0 bis 50 Gew.-%, bevorzugt 0,1 bis 30 Gew.-%, bevorzugter 1 bis 20 Gew.-% eines handelsüblichen Weichmachers,
e) 0 bis 5 Gew.-%, vorzugsweise 0,01 bis 1 Gew.-%, eines oder mehrerer Additive, bevorzugt ausgewählt aus thermischen oder photochemischen Polymerisations- bzw. Vernetzungsinitiatoren, Sensibilisierungsmitteln, Netzhilfsmitteln, Adhäsionshilfsmitteln (Haftvermittlern), Antioxidationsmitteln, Verlaufsmitteln, Stabilisatoren, Farbstoffen, photochromen oder thermochromen Verbindungen, und
f) 0 bis 4,9 Gew.-% organischer Monomere und/oder 0 bis 50 Gew.-% organischer Oligomere.

Das Gesamttrockengewicht bezieht sich auf das Gesamtgewicht des Hybridmaterials ohne Lösungsmittel. Bevorzugt machen die Komponenten a) bis f) 100 Gew.-% des Gesamttrockengewichts aus, d.h. das Hybridmaterial enthält bevorzugt neben diesen Komponenten und dem optionalen Lösungsmittel keine weiteren Komponenten. Es ist insbesondere bevorzugt, dass das Hybridmaterial keine hydrolysierbaren oder hydrolysierten Silane und auch keine Kondensationsprodukte davon (sowohl teilweise als auch vollständig kondensierte Silane) enthält. Von diesen Kondensaten ist auch SiO₂ umfasst.

Als lösliche Polymere kommen alle herkömmlichen löslichen organischen Polymere in Frage, wobei auch Mischungen von löslichen Polymeren verwendet werden können. Bevorzugt sind solche Polymere, die in organischen Lösungsmitteln löslich sind, beispielsweise in Alkoholen, wie Ethanol, Isopropanol oder Butanol, Ketonen, wie Aceton, Estern wie Ethylacetat, Ethern wie Tetrahydrofuran und Glycolen, wie Ethylenglycol, oder in aliphatischen, aromatischen und halogenierten Kohlenwasserstoffen, wie Hexan, Benzol, Toluol und Chloroform. Beispiele für solche löslichen Polymere sind Acrylate, wie Polyacrylat, Polymethacrylat, Polyepoxid, Polyvinylalkohol, Polyvinylacetat, Polyvinylbutyral und Polyacrylamid. Als lösliche Polymere können z.B. Polymere verwendet werden, die in dem eingesetzten Lösungsmittel bei 20°C zu mindestens 20 g/l löslich sind.

Bei den erfindungsgemäß eingesetzten ein- oder mehrkernigen Metallkomplexen handelt es sich um Komplexe von Metallen mit einem oder mehreren Metallatomen als Zentralatom(e). Für den Komplex können alle Metalle eingesetzt werden, z.B. Metalle der zweiten bis sechsten, bevorzugt der zweiten bis fünften Hauptgruppe des Periodensystems der Elemente oder der ersten bis achten Nebengruppe des Periodensystems der Elemente bzw. der Übergangsmetalle, einschließlich der Lanthanoiden und Actinoiden. Bevorzugt sind Zn, Ti, Zr, Ce, Sn, La, Fe, Ta, Hf, Nb, Al, Cu, V, M, W, Ag und Cu, wobei Ti, Zr, Ta und Nb besonders bevorzugt sind. Halbmetalle wie Si, B oder As sind keine Metalle.

Die Komplexe können neben dem oder den Liganden, die die photochemisch oder thermisch polymerisierbare Gruppe enthalten, bevorzugt weitere übliche Gruppen als Komplexliganden enthalten. Diese Komplexliganden sind dem Fachmann bekannt. Beispiele für solche weiteren Liganden sind Alkoxide, bevorzugt C₁₋₆-Alkoxide, Phenoxy, Halogenide (F, Cl, Br, I), Oxo und Amin. Beispiele für organische Liganden sind Carbonsäuren, ß-Diketone, wie Acetessigester oder Acetylacetonate, CH-acide Verbindungen, Chelatliganden, die z.B. ein oder mehrere Amino-, Oxo- und/oder Hydroxygruppen aufweisen, wie EDTA oder en (Ethylendiamin), Aminosäuren, Peptide und Proteine oder korrespondierende Basen dieser Verbindungen. Die korrespondierende Base von Carbonsäure ist z.B. eine Carboxylatverbindung, wie das Acetatanion. Weitere Beispiele für Liganden sind z.B. in Holleman, Wiberg, Lehrbuch der Anorganischen Chemie, Bd. 91.-100, deGruyter, 1985, S. 970 aufgeführt.

Bei dem Liganden, der die thermisch oder photochemisch polymerisierbare funktionelle Gruppe enthält, kann es sich um einen organischen Liganden handeln, insbesondere einen der vorstehend genannten Beispiele für organische Liganden, der zusätzlich mindestens eine photochemisch oder thermisch polymerisierbare funktionelle Gruppe enthält. Diese Liganden sind gewöhnlich bifunktionelle Verbindungen mit einer funktionellen Gruppe zur Anbindung an das Metall und der polymerisierbaren Gruppe. Bei den polymerisierbaren Gruppen handelt sich um reaktive Gruppen, die mit sich selbst oder mit anderen Gruppen Verknüpfungsreaktionen eingehen können, die photochemisch oder thermisch initiiert werden können. Polymerisation bzw. polymerisierbar schließt hier und im Folgenden auch Polykondensation bzw. polykondensierbar und Polyaddition bzw. polyaddierbar ein und umfasst auch Vernetzungs- bzw. Härtungsreaktionen. Die polymerisierbaren Gruppen sind dem Fachmann bekannt.

Beispiele für polymerisierbare Gruppen sind C=C-Doppelbindungen, OH-Gruppen, Epoxy-Gruppen, Aminogruppen oder andere Gruppen, die chemisch miteinander verknüpfbar sind, wobei die Bildung dieser Verknüpfung photochemisch oder thermisch initiiert werden kann. Es kann sich dabei auch um die Verknüpfung unterschiedlicher Gruppen miteinander handeln. In diesem Fall werden als Metallkomplex jeweils Komplexe mit den unterschiedlichen Gruppen verwendet, um die Verknüpfung zu gewährleisten. Bevorzugt werden thermisch oder photochemisch polymerisierbare Gruppen, die über eine (Meth)acryl-, Allyl-, Vinyl- oder Epoxygruppe verfügen, wobei (Meth)acryl- und Epoxygruppen besonders bevorzugt werden. Ebenso kommen Aminogruppen in Frage, die Kondensationen z. B. mit Epoxidgruppen, OH-Gruppen oder Säurechloriden eingehen können. Besonders bevorzugt werden dabei primäre Monoaminogruppen. Bevorzugt sind photochemisch polymerisierbare Gruppen.

Als Ligand, der keine polymerisierbare Gruppe enthält, ist Alkoxid bevorzugt. Die Metallkomplexe werden daher bevorzugt aus der Umsetzung von üblichen Metallalkoxiden mit dem Liganden, der die photochemisch oder thermisch polymerisierbare funktionelle Gruppe enthält, und gegebenenfalls weiteren Liganden erhalten. Die Metallkomplexe können vorzugsweise durch weitere Reaktion Chalcogenide, Sulfide, Halogenide oder Metalle bilden. Beispielsweise können die Metallkomplexe durch Hydrolyse oder Acidolyse zu Chalkogeniden oder Halogeniden umgesetzt werden. Die Metallkomplexe sind bevorzugt Komplexe mit Liganden mit Doppelbindungen oder anderen photochemisch oder thermisch vernetzbare organische Gruppen, die über bekannte Kupplungsgruppen (z. B. Komplexbindungen bildende Gruppen) an die Zentralatome des komplexbildenden Metalls angekoppelt sind. Die Metallkomplexe enthalten bevorzugt keine Silane als Liganden.

Die Nanopartikel werden in Konzentrationen bis zu 30 Gew.-%, bezogen auf das Gesamttrockengewicht, zugegeben. Sie können auch transparente Farbeffekte bewirken. Bevorzugt sind anorganische Nanopartikel und insbesondere aus der Gruppe der Oxide, Sulfide, Selenide, Telluride, Halogenide, Carbide, Arsenide, Antimonide, Nitride, Phosphide, Carbonate, Carboxylate, Phosphate, Sulfate, Silicate, Titanate, Zirconate, Stannate, Plumbate, Aluminate und entsprechenden Mischoxide, und der Metalle.

Die oberflächenmodifizierten Nanopartikel umfassen vorzugsweise die Oxide ZnO, TiO₂, ZrO₂, CeO₂, SnO₂, La₂O₃, Fe₂O₃, Ta₂O₅, Hf₂O₅, Nb₂O₅, Cu₂O, V₂O₅, MO₃ und WO₃, sowie die Halogenide AgCl, AgBr, Agl, Cul, CuBr. Es können aber auch Sulfide, unlösliche Sulfate oder andere schwerlösliche Salze verwendet werden, ebenso wie Metallkolloide, z. B. aus der Gruppe der Edelmetalle und Cu. Genauso lassen sich Mischoxide oder komplexe Oxide verwenden. Beispiele dafür sind PZT, Bariumtitanat und ähnliche Verbindungen.

Die Nanopartikel sind oberflächenmodifiziert, d.h. an der Oberfläche der Partikel sind Reste, bevorzugt organische Gruppen oder Moleküle, angebunden. Die Gruppen können dabei wahlweise auf der Oberfläche des Nanopartikels immobilisiert oder Bestandteil eines Komplexliganden sein; dann wird die zur Vernetzung heranzuziehende Gruppe in Form eines Monomers verwendet und umgekehrt. Die an den Oberflächen der nanoskaligen Teilchen vorhandenen organischen Gruppen weisen bevorzugt polymerisierbare und/oder polykondensierbare Gruppen auf und sie haben bevorzugt ein Molekulargewicht von unter 300, insbesondere unter 200.

Zur Herstellung der oberflächenmodifizierten Nanopartikel kommen alle gebräuchlichen Herstellungsverfahren in Betracht, wie z. B. in der DE-A-19719948 beschrieben. Die Nanopartikel können auf unterschiedlichen Wegen in das System eingebracht werden: Zum einen können kommerziell erhältliche Nanopartikel nach entsprechender Kompatibilisierung oder Oberflächenmodifikation als kolloidale Suspension in Lösungsmitteln (mischbar mit dem Lösungsmittel des Hybridmaterials) verwendet werden.

Die Oberflächenmodifikation kann durch Umsetzung von Nanopartikeln mit Oberflächenmodifizierungsmitteln erhalten werden. Als Oberflächenmodifizierungsmittel können organische Verbindungen eingesetzt werden, die eine reaktive Gruppe aufweisen, die mit den Oberflächengruppen auf den Nanopartikeln wechselwirken kann und bevorzugt eine kovalente Bindung bildet. Beispiele für diese organischen Verbindungen sind Amine oder Alkohole und insbesondere die bei Komponente b) aufgeführten organischen Liganden. Das Oberflächenmodifizierungsmittel besitzt gegebenenfalls eine funktionelle Gruppe und bevorzugt die nachstehend diskutierten polymerisierbaren und/oder polykondensierbaren Gruppen. Beispiele für solche polymerisierbare Gruppen enthaltenden OberFlächenmodifizierungsmittel sind ungesättigten Carbonsäuren, insbesondere Methacrylsäure und Acrylsäure, und/oder ungesättigte ß-Diketone. Zum anderen können die Nanopartikel auch in situ aus bekannten Precursoren in Anwesenheit der Oberflächenmodifizierungsmittel hergestellt werden.

Die genannten Oberflächengruppen weisen bevorzugt organische polymerisierbare und/oder polykondensierbare Gruppen auf, die einer radikalischen, kationischen oder anionischen, thermischen oder photochemischen Polymerisation oder einer thermischen oder photochemischen Polykondensation zugänglich sind. Aber auch Additionen, wie z. B. nach dem Prinzip der Michael-Addition, kommen in Frage. Bevorzugt werden Oberflächengruppen, die über eine (Meth)acryl-, Allyl-, Vinyl- oder Epoxygruppe verfügen, wobei (Meth)acryl- und Epoxygruppen besonders bevorzugt werden. Ebenso kommen Aminogruppen in Frage, die Kondensationen z.B. mit Epoxidgruppen, OH-Gruppen oder Säurechloriden eingehen können. Besonders bevorzugt werden dabei primäre Monoaminogruppen. In analoger Weise können Gruppen verwendet werden, die sich zu Polyurethanen umsetzen lassen, z.B. Isocyanatreste in Verbindung mit OH-Gruppen, besonders bevorzugt sind dabei Diole.

Die Nanopartikel weisen vorzugsweise einen Durchmesser von nicht mehr als 100 nm, insbesondere nicht mehr als 50 nm auf. Hinsichtlich der Untergrenze gibt es keine besondere Beschränkung, wenngleich diese Untergrenze aus theoretischen Gründen in der Regel bei 0,5 nm, aus praktischen Gründen jedoch insbesondere bei 2 bis 3 nm und häufig bei 4 bis 10 nm liegt.

Unter Durchmesser wird hier der mittlere Teilchendurchmesser bezogen auf das Volumenmittel verstanden, wobei ein UPA (Ultrafine Particle Analyzer, Leeds Northrup (laseroptisch, dynamische Laserlichtstreuung)) zur Messung verwendet werden kann. Zur Bestimmung sehr kleiner Teilchen können auch elektronenmikroskopische Methoden (z.B. über HR-TEM) verwendet werden.

Als Weichmacher kommen prinzipiell alle handelsüblichen Verbindungen in Betracht, z. B nach DIN 55945 (Dezember 1988). Bevorzugt sind Weichmacher ausgewählt aus der Gruppe der acyclischen aliphatischen Dicarbonsäureester, z.B. Ester der Adipinsäure, wie Di-n-octyladipat, Bis-(2-ethylhexyl)adipat, Diisodecyladipat, Dibutylsebacat, Dioctylsebacat und Bis-(2-ethylhexyl)sebacat; Ester von C₆-C₁₂-Dicarbonsäuren mit Polyalkylenglykolen, z.B. Triethylenglykol-bis-(n-heptanoat), Triethylenglykol-bis-(2-ethylhexanoat), Triethylenglykol-bis-(isononanoat); Ester von C₆-C₁₂-Carbonsäuren mit Polyalkylenglykolen, z.B. Triethylenglykol-bis-(2-ethylbutyrat); Diester aus (Meth)acrylsäure und Polyalkylenglykolen, wie Polypropylenglykoldiacrylat oder -dimethacrylat, Polyethylenglykoldiacrylat oder -dimethacrylat, beispielsweise Tetraethylenglykoldi(meth)acrylat.

Ferner kann das Hybridmaterial weitere Additive enthalten (Komponente e)), bevorzugt ausgewählt aus thermischen oder photochemischen Vernetzungsinitiatoren, Sensibilisierungsmitteln, Netzhilfsmitteln, Adhäsionshilfsmitteln bzw. Haftvermittlern, Antioxidationsmitteln, Verlaufsmitteln, Stabilisatoren, Farbstoffen, photochromen und thermochromen Verbindungen oder einer Kombination davon.

Das Hybridmaterial enthält zweckmäßigerweise einen Polymerisationskatalysator (einschließlich Polyadditions- und/oder Polykondensationskatalysatoren), der die Vernetzung und Härtung thermisch und/oder photochemisch induzieren kann ("Polymerisations- oder Vernetzungsinitiator"). Als Photoinitiatoren können z.B. die im Handel erhältlichen Starter eingesetzt werden. Beispiele hierfür sind Irgacure^{®}184 (1-Hydroxycyclohexylphenylketon), Irgacure^{®} 500 (1-Hydroxycyclohexylphenylketon, Benzophenon) und andere Photoinitiatoren vom Irgacure^{®}-Typ; Darocur^{®} 1173, 1116, 1398, 1174, 1020, 2-Chlorthioxanthon, 2-Methylthioxanthon, 2-Isopropylthio-xanthon, Benzoin, 4,4'-Dimethoxybenzoin, Benzoinethylether, Benzoinisopropylether, Benzyldimethylketal, 1,1,1-Trichloracetophenon, Diethoxyacetophenon und Dibenzosuberon. Es können auch Photoinitiatoren und dazu passende Sensibilisierungsmittel verwendet werden, die z.B. durch sichtbares Licht angeregt werden.

Als thermische Initiatoren kommen vorzugsweise organische Peroxide in Form von Diacylperoxiden, Peroxydicarbonaten, Alkylperestern, Dialkylperoxiden, Perketalen, Ketonperoxiden und Alkylhydroperoxiden in Frage. Beispiele für derartige thermische Initiatoren sind Dibenzoylperoxid, tert.-Butylperbenzoat und Azobisisobutyronitril. Ein Beispiel für einen kationischen Thermostarter ist 1-Methylimidazol. Beispiele für Verlaufsmittel sind polyethermodifizierte Dimethylpolysiloxane, wie z.B. Byk 306^{®}. Beispiele für Sensibilisierungsmittel sind aminmodifizierte Oligoetheracrylate, wie z.B. Grodamere^{®}.

Als organische Monomere und/oder Oligomere werden insbesondere solche verwendet, die in dem verwendeten Lösungsmittel löslich sind. Als Monomere oder Oligomere kommen insbesondere alle organischen Verbindungen in Frage, die die unter b) genannten polymerisierbaren bzw. vernetzbaren funktionellen Gruppen tragen. Bevorzugt werden Monomere und/oder Oligomere mit fotochemisch polymerisierbaren bzw. vernetzbaren Gruppen eingesetzt. Diese können mit Hilfe der bei Komponente e) genannten photochemischen oder thermischen Initiatoren polymerisiert bzw. vernetzt werden. Die Menge beträgt, bezogen auf das Gesamttrockengewicht, z.B. 0 bis 54,9 Gew.-% organische Monomere und/oder Oligomere, wobei 0 bis 4,9 Gew.-% Monomere und/oder 0 bis 50 Gew.-% Oligomere bevorzugt sind.

Bevorzugte Beispiele für diese Monomere und/oder Oligomere sind Acrylate, vorzugsweise Methylmethacrylate. Es können aber auch z.B. Diacrylate verwendet werden, wie z. B. Dioldiacrylate oder Dioldimethacrylate, Hexandioldimethacrylat, Hexandioldiacrylat, Dodecandioldiacrylat oder Dodecandioldimethacrylat.

Zur Herstellung des Hybidmaterials wird in der Regel ein Lösungsmittel verwendet. Die Menge des verwendeten Lösungsmittels im Hybridmaterial hängt von der beabsichtigten Anwendung ab. Auf diese Weise dient das Hybridmaterial als Beschichtungszusammensetzung oder Formmasse. Als Lösungsmittel kommen alle üblichen Lösungsmittel in Betracht, mit denen die löslichen Polymere gelöst werden können. Bevorzugt sind organische Lösungsmittel und Wasser. Es können auch Mischungen von Lösungsmitteln eingesetzt werden. Beispiele für organische Lösungsmittel sind Alkohole, wie Ethanol, Isopropanol oder Butanol, Ketone, wie Aceton, Ester wie Ethylacetat, Ether wie Tetrahydrofuran und Glycole, wie Ethylenglycol, aliphatische, aromatische und halogenierte Kohlenwasserstoffe, wie Hexan, Benzol, Toluol und Chloroform.

Das Hybridmaterial ist ein Matrix bildendes Material und eignet sich hervorragend für die Herstellung von Formkörpern oder Beschichtungen mit einem Brechzahlgradienten. Dementsprechend beinhaltet die Erfindung auch Verfahren zur Herstellung solcher Schichten und Formkörper mit Brechzahlgradienten und die daraus erhaltenen Gegenstände. Im folgenden wird das Verfahren anhand von Beschichtungen beschrieben. Für die Herstellung von Formkörpern gilt das gleiche entsprechend, wobei Formteile ansonsten nach den üblichen Formverfahren gebildet werden können, z.B. durch Einbringen in oder Auftragen auf ein Formwerkzeug und Entnahme aus bzw. von dem Formwerkzeug nach Härtung. Die geeigneten Verfahren schließen auch Foliengießen ein.

In einer besonders bevorzugten Ausführungsform wird ein Substrat, bevorzugt eine Trägerfolie, z.B. aus Kunststoff, mit dem Hybridmaterial wie nachstehend erläutert beschichtet und nach Härtung wird die gebildete Beschichtung von dem Substrat abgelöst (delaminiert), wobei eine selbsttragende Folie oder Platte als optische Komponente mit Brechzahlgradient erhalten wird.

Das Verfahren zur Herstellung von Schichten mit Brechzahlgradienten beinhaltet das Auftragen des Hybridmaterials auf ein Substrat. Es kann jedes geeignete Substrat verwendet werden, bevorzugt Glas- oder Kunststoffsubstrate, wie Kunststoffplatten oder Polymerfolien. Das Substrat ist bevorzugt transparent. Zur Herstellung eines Materials mit Brechzahlgradient wird das polymerisierbare Hybridmaterial bevorzugt auf ein transparentes Substrat, vorzugsweise auf transparente Kunststofffolien, insbesondere PET, PE, PP, TAC oder PC, aufgetragen.

Die Beschichtung mit dem Hybridmaterial kann nach üblichen Methoden erfolgen, z.B. durch Tauchen, Fluten, Rakeln, Gießen, Schleudern, Spritzen, Aufstreichen, Slot-Coating, Meniskus-Beschichten, Foliengießen, Walzenauftrag, Drucken, z. B. Flexoprint, oder Sprühen. Die jeweils erforderliche Viskosität kann durch die Menge des verwendeten Lösungsmittels, die Art des Polymers oder gegebenenfalls durch Menge und Art des Monomers und/oder Oligomers eingestellt werden. Bevorzugte Schichtdicken (im getrockneten bzw. ausgehärteten Zustand) liegen zwischen 1 bis 100 µm.

Die Brechzahlgradienten werden erzeugt durch einen Konzentrationsgradienten des in dem Hybridmaterial enthaltenen anorganischen Materials in dem Hybridmaterial, das durch Zonen hochbrechender, anorganisch angereicherter Materialien hervorgerufen wird. Der Konzentrationsgradient und damit der Brechzahlgradient kann durch eine beliebige Gradienten bildende Maßnahme erzeugt werden. Bevorzugt erfolgt die Gradienten bildende Maßnahme an einem Hybridmaterial, das fest oder viskos ist. Das Hybridmaterial kann für die Gradienten bildenden Maßnahme z.B. eine Viskosität bei 25°C von 2 bis 3.500 Pas, bevorzugt 500 bis 2.000 Pas aufweisen. Dies kann z.B. durch teilweises oder vollständiges Entfernen des Lösungsmittels eingestellt werden.

Durch die Gradienten bildende Maßnahe wird eine Potentialdifferenz als treibende Kraft zur gerichteten Diffusion der polymerisierbaren Metallkomplexe über Unterschiede im chemischen Potential (in der Konzentration von chemischen Stoffen oder chemischen Gruppen), beispielsweise analog dem vorstehend beschriebenen Colburn-Haines-Effekt, erzeugt.

Die Gradienten bildende Maßnahme ist insbesondere eine lokale bzw. mustermäßige Bestrahlung oder Erwärmung der Hybridschicht, um gezielt an lokalen Stellen photochemisch oder thermisch eine Polymerisation auszulösen, die zur Ausbildung des Konzentrationsgradienten führt. Bevorzugt wird Holographie, z.B. Zweiwellenmischen, Lithographie oder lokale Bestrahlung bzw. Belichtung als Gradienten bildende Maßnahme eingesetzt. Bevorzugt werden Laserlicht, UV-Licht oder sichtbares Licht verwendet. Die mustermäßige Bestrahlung kann gegebenenfalls bei einer erhöhten Temperatur von 30 bis 90°C und bevorzugt 50 bis 70°C ausgeführt werden.

Unter dem Einfluss der Gradienten bildenden Maßnahmen, beispielsweise einer lokalen Belichtung und in Anwesenheit eines Vernetzungsinitiators, vernetzen bzw. polymerisieren die frei diffundierenden Metallkomplexe über die Verknüpfung der polymerisierbaren bzw. vernetzbaren Liganden und bilden damit lokale Zonen mit höheren Brechwerten. Dabei können auch neue anorganische Bindungen geknüpft werden, wie zum Beispiel oxidische, sulfidische oder metallische, die ebenfalls zur Brechwerterhöhung beitragen können. Auf diese Weise wird der Konzentrationsgradient erzeugt.

Bevorzugt sind ein Beschichtungsmaterial aus dem Hybridmaterial, das auf transparenten Kunststofffolien aufgetragen wird und in dem z.B. über Holographie, Lithographie oder durch lokale Belichtung optische Strukturen mit Brechzahlgradienten erzeugt werden können, und ein Verfahren zur Herstellung einer Folie, bei dem man das erfindungsgemäße Hybridmaterial mit nasschemischen Verfahren auf eine transparente Kunststofffolie aufträgt und das Lösungsmittel durch Trocknen weitgehend entfernt, beispielsweise auf einen Restanteil von 0 bis 20 Gew.-%, insbesondere 0 bis 10 Gew.-%, bezogen auf das Gesamtgewicht des Hybridmaterials. In dieser Form oder delaminiert vom Substrat kann die Folie aufgewickelt gelagert werden. Zur Vermeidung von unerwünschten Nachreaktionen wird die Folie, wie bei lichtempfindlichen Materialien üblich, lichtgeschützt verpackt und klimatisiert (15 bis 30°C).

Durch mustermäßige Bestrahlung, wie durch Holographie, Lithographie oder lokale Belichtung, wird wie beschrieben ein Brechzahlgradient in der Hybridschicht erzeugt. Durch den durch die thermische Diffusion hervorgerufenen Transportprozess der vernetzbare Bindungen tragenden Komplexmoleküle gelangen diese in den Bereich der lokalen Belichtung und vernetzen an dieser Stelle untereinander oder mit vernetzbaren Matrixkomponenten. Dabei ist es auch möglich, dass sich durch die lokale Anreicherung der Komplexmoleküle hochbrechende Nanocluster oder -partikel bilden. In Folge der durch die Zusammensetzung bedingten höherbrechenden anorganischen Anteile bilden die Komponenten an der belichteten Stelle Zonen mit höherem Brechwert. Analog können polymerisierbare bzw. vernetzbare Gruppen tragende Nanopartikel miteinander oder mit vernetzbaren Matrixkomponenten verknüpft werden und bilden ebenfalls Zonen mit höherem Brechwert. Im Gegensatz dazu verbleiben an den unbelichteten Nachbarregionen Zonen mit niedrigerem Brechwert. Aus dieser Nachbarregion diffundieren weitere Komplexmoleküle in die belichtete Region. Dieser Prozess mit der gerichteten Diffusion erfolgt während der Belichtung und dauert in der Regel etwa zwischen einer bis wenigen Sekunden und wenigen Minuten, je nach Belichtungsbedingungen und Temperatur. Durch den Brechzahlunterschied zwischen den Zonen mit höherem und niedrigerem Brechwert entsteht ein lokaler Brechzahlgradient.

Überraschenderweise erfolgt die Migration der verknüpfbaren bzw. polymerisierbaren/vernetzbaren Komplexe in dem Hybridmaterial auch wenn das Hybridmaterial bzw. die Matrix fest oder viskos ist.

Im Anschluss an diesen Prozess erfolgt die vollständige Vernetzung des Hybridmaterials (der Matrix), das noch Komponenten mit noch nicht vernetzten Gruppen enthält, bevorzugt durch flächenmäßige Photopolymerisation und/oder durch thermisch initiierte Polymerisation unter Fixierung des gebildeten Gradienten. Dabei wird noch eventuell vorhandenes Restlösungsmittel entfernt (Stabilisierung der Schicht). Bevorzugt ist die Bestrahlung mit UV-Licht oder sichtbarem Licht zur vollständigen Härtung des Hybridmaterials unter Fixierung des Gradienten.

Die beschriebene Stabilisierung der den Brechwertgradienten enthaltenden Schicht erfolgt bevorzugt über flächige Belichtung, wobei die nicht in die Zonen höheren Brechwertes eindiffundierten polymerisierbaren Gruppen sich untereinander vernetzen, sodass die gesamte Schichtfläche stabilisiert wird. Dabei konvertieren die Doppelbindungen oder anderweitigen polymerisierbaren Gruppen zu den entsprechenden Einfachbindungen.

Der Konversionsgrad gibt dabei das Ausmaß der Polymerisationsreaktion der in den Komplexliganden oder in der Matrix (organische Komponenten) vorhandenen, reaktiven Gruppen, z. B. C=C-Doppelbindungen oder Epoxygruppen, an. Ein organischer Konversionsgrad von beispielsweise 95 % bedeutet, dass 95 % aller C=C-Doppelbindungen oder Epoxygruppen umgesetzt sind. Für die Bestimmung des Konversionsgrades gibt es in der Fachliteratur verschiedene Messmethoden, z. B. Infrarot-Messmethoden. Die Polymerisation kann Mithilfe üblicher Initiatoren, thermisch oder durch UV-Licht, gestartet werden. Solche Initiatoren sind vorstehend genannt.

Die nach dem erfindungsgemäßen Verfahren hergestellten beschichteten Substrate und Formkörper mit Brechzahlgradienten können für transparenten oder transluzente Schichten mit Brechzahlgradienten, insbesondere für holographisch und fotolithografisch hergestellte Gradientenindexlinsen, holographische Bilder, Lichtlenkkomponenten und Komponenten in der abbildenden Optik verwendet werden.

Das erfindungsgemäße Brechzahlgradientenmaterial kann beispielsweise zur Herstellung von passiven Lichtleiter-Elementen für Displays und Beleuchtungselemente, optische Datenspeicher, für Sicherheitshologramme, Bildhologramme, digitale Hologramme zur Informationsspeicherung, für Systeme mit Komponenten, die Lichtwellenfronten verarbeiten, für Anwendungen als planare Wellenleiter (Lichtwellenleiter), für Anwendungen zur Polarisationsbeeinflussung von Licht, für Anwendungen als Strahlteiler und als Linse verwendet werden.

## Patentansprüche

1. Anorganisch-organisches Hybridmaterial, umfassend a) ein lösliches, organisches Polymer, b) einen ein- oder mehrkernigen Metallkomplex, der mindestens einen Liganden mit mindestens einer photochemisch oder thermisch polymerisierbaren funktionellen Gruppe aufweist, und c) oberflächenmodifizierte nanoskalige Teilchen.

2. Anorganisch-organisches Hybridmaterial nach Anspruch 1, umfassend mindestens eine Komponente ausgewählt aus Lösungsmitteln, organischen Monomeren oder Oligomeren, Weichmachern und anderen Additiven.

3. Anorganisch-organisches Hybridmaterial nach Anspruch 1 oder Anspruch 2, **dadurch gekennzeichnet, dass** es, bezogen auf das Gesamttrockengewicht,
a) 4,9 bis 95,9 Gew.-% eines löslichen, organischen Polymers,
b) 0,5 bis 50 Gew.-% eines ein- oder mehrkernigen Metallkomplexes, der mindestens einen Liganden mit mindestens einer photochemisch oder thermisch polymerisierbaren funktionellen Gruppe aufweist,
c) 0,1 bis 30 Gew.-% oberflächenmodifizierte nanoskalige Teilchen aus der Gruppe der Oxide, Sulfide, Selenide, Telluride, Halogenide, Carbide, Arsenide, Antimonide, Nitride, Phosphide, Carbonate, Carboxylate, Phosphate, Sulfate, Silicate, Titanate, Zirconate, Stannate, Plumbate, Aluminate und entsprechenden Mischoxide, und der Metalle,
d) 0 bis 50 Gew.-% eines Weichmachers,
e) 0 bis 5 Gew.-% eines Additivs ausgewählt aus thermischen oder photochemischen Polymerisations- bzw. Vernetzungsinitiatoren, Sensibilisierungsmitteln, Netzhilfsmitteln, Adhäsionshilfsmitteln, Antioxidationsmitteln, Verlaufsmitteln, Stabilisatoren, Farbstoffen, photochromen und thermochromen Verbindungen und
f) 0 bis 4,9 Gew.-% organischer Monomere und/oder 0 bis 50 Gew.-% organischer Oligomere
umfasst.

4. Anorganisch-organisches Hybridmaterial nach einem der Ansprüche 1 bis 3, **dadurch gekennzeichnet, dass** es fest oder viskos ist.

5. Anorganisch-organisches Hybridmaterial nach einem der Ansprüche 1 bis 4, **dadurch gekennzeichnet, dass** die Komponente f) ein Acrylat, bevorzugt ein Methylmethacrylat, Dioldiacrylat oder Dioldimethacrylat, und/oder ein Oligomer davon ist.

6. Anorganisch-organisches Hybridmaterial nach einem der Ansprüche 1 bis 5, **dadurch gekennzeichnet, dass** das lösliche Polymer ein Polyacrylat, Polymethacrylat, Polyepoxid, Polyvinylalkohol, Polyvinylacetat, Polyvinylbutyral oder Polyacrylamid ist.

7. Anorganisch-organisches Hybridmaterial nach einem der Ansprüche 1 bis 6, **dadurch gekennzeichnet, dass** der ein- oder mehrkernige Metallkomplex mindestens eine Alkoxidgruppe an dem oder den Metallzentralatomen aufweist.

8. Anorganisch-organisches Hybridmaterial nach einem der Ansprüche 1 bis 7, **dadurch gekennzeichnet, dass** der Ligand mit mindestens einer photochemisch oder thermisch polymerisierbaren funktionellen Gruppe des ein- oder mehrkernigen Metallkomplexes aus Carbonsäuren, ß-Diketonen, CH-aciden Verbindungen, Chelatliganden, Aminosäuren, Peptiden und Proteinen oder korrespondierenden Basen davon ausgewählt ist, die jeweils mindestens eine photochemisch oder thermisch polymerisierbare Gruppe enthalten.

9. Anorganisch-organisches Hybridmaterial nach einem der Ansprüche 1 bis 8, **dadurch gekennzeichnet, dass** die photochemisch oder thermisch polymerisierbare funktionelle Gruppe eine C=C-Doppelbindung, Hydroxy, Epoxy oder Amino ist.

10. Anorganisch-organisches Hybridmaterial nach einem der Ansprüche 1 bis 9, **dadurch gekennzeichnet, dass** das Hybridmaterial, bezogen auf das Gesamttrockengewicht, 10 bis 80 Gew.-%, bevorzugt 20 bis 40 Gew.-%, lösliches Polymer umfasst.

11. Anorganisch-organisches Hybridmaterial nach einem der Ansprüche 1 bis 10, **dadurch gekennzeichnet, dass** der Ligand mindestens eine photochemisch polymerisierbare funktionelle Gruppe aufweist.

12. Anorganisch-organisches Hybridmaterial nach einem der Ansprüche 1 bis 11, **dadurch gekennzeichnet, dass** das Hybridmaterial, bezogen auf das Gesamttrockengewicht, 0,1 bis 30 Gew.-% und bevorzugt 1 bis 20 Gew.-% eines Weichmachers umfasst.

13. Anorganisch-organisches Hybridmaterial nach einem der Ansprüche 1 bis 12, **dadurch gekennzeichnet, dass** das Hybridmaterial, bezogen auf das Gesamttrockengewicht, 0 bis 5 Gew.-% eines thermischen und/oder photochemischen Polymerisations- oder Vernetzungsinitiators umfasst.

14. Anorganisch-organisches Hybridmaterial nach einem der Ansprüche 1 bis 13, **dadurch gekennzeichnet, dass** die oberflächenmodifizierten Nanopartikel aus TiO₂, ZrO₂, Nb₂O₅ und Ta₂O₅ sind.

15. Anorganisch-organisches Hybridmaterial nach einem der Ansprüche 1 bis 14, **dadurch gekennzeichnet, dass** die oberflächenmodifizierten nanoskaligen Teilchen polymerisierbare Oberflächengruppen, insbesondere (Meth)acryl-, Allyl-, Vinyl-, Epoxy-, Hydroxy-, Carboxy- oder Aminogruppen, aufweisen.

16. Verfahren zur Herstellung eines optischen Bauteils, **dadurch gekennzeichnet, dass**
a) ein anorganisch-organisches Hybridmaterial nach einem der Ansprüche 1 bis 15 auf ein Substrat aufgetragen oder in oder auf ein Formwerkzeug gegeben wird,
b) das Hybridmaterial gegebenenfalls getrocknet wird, damit es fest oder viskos wird,
c) das feste oder viskose Hybridmaterial mustermäßig bestrahlt oder erwärmt wird, um einen Brechzahlgradienten in dem Hybridmaterial zu erzeugen, und
d) das Hybridmaterial thermisch und/oder photochemisch unter Fixierung des Brechzahlgradienten vollständig gehärtet wird.

17. Verfahren nach Anspruch 16, **dadurch gekennzeichnet, dass** die mustermäßige Bestrahlung in Schritt c) bei einer erhöhten Temperatur von 30 bis 90 °C, bevorzugt 50 bis 70°C durchgeführt wird.

18. Verfahren nach Anspruch 16 oder Anspruch 17, **dadurch gekennzeichnet, dass** das Hybridmaterial auf eine transparente Kunststofffolie aufgetragen wird und gegebenenfalls eine transparente Abdeckfolie auf die gegebenenfalls getrocknete Hybridschicht auflaminiert wird.

19. Verfahren nach einem der Ansprüche 16 bis 18, **dadurch gekennzeichnet, dass** die mustermäßige Bestrahlung mittels Holografie, Lithografie oder lokaler Bestrahlung durchgeführt wird.

20. Verfahren nach einem der Ansprüche 16 bis 19, **dadurch gekennzeichnet, dass** in der Hybridschicht ein Brechzahlgradient senkrecht zur Bestrahlungsrichtung erzeugt wird.

21. Verfahren nach einem der Ansprüche 16 bis 20, **dadurch gekennzeichnet, dass** in dem anorganisch-organischen Hybridmaterial durch lokale Bestrahlung ein Brechwertgradient senkrecht zur Bestrahlungsrichtung mit hoher lateraler Auflösung erzeugt wird.

22. Verfahren nach einem der Ansprüche 16 bis 21, **dadurch gekennzeichnet, dass** das die erhaltene Hybridschicht von dem Substrat delaminiert wird, um die Hybridschicht als Folie oder Platte zu erhalten.

23. Optisches Bauteil, erhältlich nach einem Verfahren der Ansprüche 16 bis 22.

24. Optisches Bauteil nach Anspruch 23, **dadurch gekennzeichnet, dass** es ein beschichtetes Substrat oder ein Formteil ist.

25. Optisches Bauteil nach Anspruch 23 oder Anspruch 24, **dadurch gekennzeichnet, dass** es eine transparente oder transluzente Hybridschicht mit Brechzahlgradienten aufweist.

26. Optisches Bauteil nach einem der Ansprüche 23 bis 25, **dadurch gekennzeichnet, dass** es sich um eine Brechzahlgradientenfolie handelt.

27. Optisches Bauteil nach Anspruch 26, **dadurch gekennzeichnet, dass** die Brechzahlgradientenfolie eine oder mehrere transparente Kunststofffolien, die mit einem Hybridmaterial beschichtet sind, in welchem ein Brechzahlgradient vorliegt, umfasst oder im wesentlichen daraus besteht.

28. Verwendung eines optischen Bauteils nach einem der Ansprüche 23 bis 27 in bildgebenden optischen Elementen, für lichtlenkende optische Bauteile oder für die holografische Datenspeicherung.

## Claims

1. Inorganic-organic hybrid material comprising a) a soluble organic polymer, b) a mono- or polynuclear metal complex having at least one ligand containing at least one photochemically or thermally polymerizable functional group, and c) surface-modified nanoscale particles.

2. Inorganic-organic hybrid material according to Claim 1, comprising at least one component selected from solvents, organic monomers or oligomers, plasticizers and other additives.

3. Inorganic-organic hybrid material according to Claim 1 or Claim 2, **characterized in that** it comprises, based on the total dry weight,
a) 4.9% to 95.9% by weight of a soluble organic polymer,
b) 0.5% to 50% by weight of a mono- or polynuclear metal complex having at least one ligand containing at least one photochemically or thermally polymerizable functional group,
c) 0.1% to 30% by weight of surface-modified nanoscale particles from the group of oxides, sulphides, selenides, tellurides, halides, carbides, arsenides, antimonides, nitrides, phosphides, carbonates, carboxylates, phosphates, sulphates, silicates, titanates, zirconates, stannates, plumbates, aluminates and corresponding mixed oxides, and of metals,
d) 0 to 50% by weight of a plasticizer,
e) 0 to 5% by weight of an additive selected from thermal or photochemical polymerization or crosslinking initiators, sensitizers, wetting aids, adhesion promoters, antioxidants, flow control agents, stabilizers, dyes, photochromic and thermochromic compounds, and
f) 0 to 4.9% by weight of organic monomers and/or 0 to 50% by weight of organic oligomers.

4. Inorganic-organic hybrid material according to any one of Claims 1 to 3, **characterized in that** it is solid or viscous.

5. Inorganic-organic hybrid material according to any one of Claims 1 to 4, **characterized in that** component f) is an acrylate, preferably a methyl methacrylate, diol diacrylate or diol dimethacrylate, and/or an oligomer thereof.

6. Inorganic-organic hybrid material according to any one of Claims 1 to 5, **characterized in that** the soluble polymer is a polyacrylate, polymethacrylate, polyepoxide, polyvinyl alcohol, polyvinyl acetate, polyvinyl butyral or polyacrylamide.

7. Inorganic-organic hybrid material according to any one of Claims 1 to 6, **characterized in that** the mono- or polynuclear metal complex has at least one alkoxide group on the central metal atom or atoms.

8. Inorganic-organic hybrid material according to any one of Claims 1 to 7, **characterized in that** the ligand containing at least one photochemically or thermally polymerizable functional group of the mono- or polynuclear metal complex is selected from carboxylic acids, β-diketones, CH-acidic compounds, chelate ligands, amino acids, peptides and proteins or corresponding bases thereof, each of which contain at least one photochemically or thermally polymerizable group.

9. Inorganic-organic hybrid material according to any one of Claims 1 to 8, **characterized in that** the photochemically or thermally polymerizable functional group is a C=C double bond, hydroxyl, epoxy or amino.

10. Inorganic-organic hybrid material according to any one of Claims 1 to 9, **characterized in that** the hybrid material comprises, based on the total dry weight, 10% to 80% by weight, preferably 20% to 40% by weight, of soluble polymer.

11. Inorganic-organic hybrid material according to any one of Claims 1 to 10, **characterized in that** the ligand contains at least one photochemically polymerizable functional group.

12. Inorganic-organic hybrid material according to any one of Claims 1 to 11, **characterized in that** the hybrid material comprises, based on the total dry weight, 0.1% to 30% by weight and preferably 1% to 20% by weight of a plasticizer.

13. Inorganic-organic hybrid material according to any one of Claims 1 to 12, **characterized in that** the hybrid material comprises, based on the total dry weight, 0 to 5% by weight of a thermal and/or photochemical polymerization or crosslinking initiator.

14. Inorganic-organic hybrid material according to any one of Claims 1 to 13, **characterized in that** the surface-modified nanoparticles are made of TiO₂, ZrO₂, Nb₂O₅ and Ta₂O₅.

15. Inorganic-organic hybrid material according to any one of Claims 1 to 14, **characterized in that** the surface-modified nanoscale particles have polymerizable surface groups, in particular (meth)acryloyl, allyl, vinyl, epoxy, hydroxyl, carboxyl or amino groups.

16. Method of producing an optical component, **characterized in that**
a) an inorganic-organic hybrid material according to any one of Claims 1 to 15 is applied to a substrate or placed into or onto a mould,
b) the hybrid material is dried if desired so that it becomes solid or viscous,
c) the solid or viscous hybrid material is heated or irradiated patternwise in order to produce a refractive index gradient in the hybrid material, and
d) the hybrid material is fully cured thermally and/or photochemically, the refractive index gradient becoming fixed.

17. Method according to Claim 16, **characterized in that** the patternwise irradiation in step c) is carried out at an elevated temperature of 30 to 90°C, preferably 50 to 70°C.

18. Method according to Claim 16 or Claim 17, **characterized in that** the hybrid material is applied to a transparent polymeric film and if desired a transparent liner film is laminated onto the optionally dried hybrid layer.

19. Method according to any one of Claims 16 to 18, **characterized in that** the patternwise irradiation is carried out by means of holography, lithography or local irradiation.

20. Method according to any one of Claims 16 to 19, **characterized in that** in the hybrid layer a refractive index gradient is produced perpendicularly to the direction of irradiation.

21. Method according to any one of Claims 16 to 20, **characterized in that** in the inorganic-organic hybrid material a refractive index gradient perpendicularly to the direction of irradiation, with a high lateral resolution is produced by local irradiation.

22. Method according to any one of Claims 16 to 21, **characterized in that** the resultant hybrid layer is delaminated from the substrate to obtain the hybrid layer in the form of a film or sheet.

23. Optical component obtainable by a method of Claims 16 to 22.

24. Optical component according to Claim 23, **characterized in that** it is a coated substrate or a moulding.

25. Optical component according to Claim 23 or Claim 24, **characterized in that** it has a transparent or translucent hybrid layer with refractive index gradient.

26. Optical component according to any one of Claims 23 to 25, **characterized in that** it is a refractive index gradient film.

27. Optical component according to Claim 26, **characterized in that** the refractive index gradient film comprises or substantially consists of one or more transparent polymeric films coated with a hybrid material in which a refractive index gradient is provided.

28. Use of an optical component according to any one of Claims 23 to 27 in imaging optical elements, for light-guiding optical components or for holographic data storage.

## Revendications

1. Matière hybride inorganique-organique, comprenant a) un polymère organique soluble, b) un complexe métallique mono- ou polynucléaire, qui présente au moins un ligand ayant au moins un groupe fonctionnel polymérisable photochimiquement ou thermiquement et c) des particules nanoscalaires modifiées en surface.

2. Matière hybride inorganique-organique selon la revendication 1, comprenant au moins un composant choisi parmi les solvants, monomères ou oligomères organiques, plastifiants et autres additifs.

3. Matière hybride inorganique-organique selon la revendication 1 ou la revendication 2, **caractérisée en ce qu'**elle comprend, par rapport au poids sec total :
a) 4,9 à 95,9 % en poids d'un polymère organique soluble,
b) 0,5 à 50 % en poids d'un complexe métallique mono-ou polynucléaire, qui comprend au moins un ligand ayant au moins un groupe fonctionnel polymérisable photochimiquement ou thermiquement,
c) 0,1 à 30 % en poids de particules nanoscalaires modifiées en surface choisies dans le groupe des oxydes, des sulfures, des séléniures, des tellurures, des halogénures, des carbures, des arséniures, des antimoniures, des nitrures, des phosphures, des carbonates, des carboxylates, des phosphates, des sulfates, des silicates, des titanates, des zirconates, des stannates, des plombates, des aluminates et des oxydes mixtes correspondants, et des métaux,
d) 0 à 50 % en poids d'un plastifiant,
e) 0 à 5 % en poids d'un additif choisi parmi les initiateurs de polymérisation ou de réticulation thermique ou photochimique, des agents de sensibilisation, des auxiliaires de réticulation, des auxiliaires d'adhésion, des agents antioxydants, des agents d'écoulement, des stabilisateurs, des colorants, des composés photochromes et thermochromes et
f) 0 à 4,9 % en poids des monomères organiques et/ou 0 à 50 % en poids d'oligomères organiques.

4. Matière hybride inorganique-organique selon l'une des revendications 1 à 3, **caractérisée en ce qu'**elle est solide ou visqueuse.

5. Matière hybride inorganique-organique selon l'une des revendications 1 à 4, **caractérisée en ce que** le composant f) est un acrylate, de préférence un méthacrylate de méthyle, un diacrylate de diol ou un diméthacrylate de diol et/ou un oligomère de ceux-ci.

6. Matière hybride inorganique-organique selon l'une des revendications 1 à 5, **caractérisée en ce que** le polymère soluble est un polyacrylate, un polyméthacrylate, un polyépoxyde, un alcool polyvinylique, un acétate de polyvinyle, un polyvinylbutyral ou un polyacrylamide.

7. Matière hybride inorganique-organique selon l'une des revendications 1 à 6, **caractérisée en ce que** le complexe métallique mono- ou polynucléaire comprend au moins un groupe alcoxyde sur le ou les atomes métalliques centraux.

8. Matière hybride inorganique-organique selon l'une des revendications 1 à 7, **caractérisée en ce que** le ligand ayant au moins un groupe fonctionnel polymérisable photochimiquement ou thermiquement du complexe métallique mono- ou polynucléaire est choisi parmi les acides carboxyliques, les β-dicétones, les composés CH-acides, les ligands de chélates, les acides aminés, les peptides et les protéines ou les bases correspondantes de ceux-ci, qui contiennent respectivement au moins un groupe polymérisable photochimiquement ou thermiquement.

9. Matière hybride inorganique-organique selon l'une des revendications 1 à 8, **caractérisée en ce que** le groupe fonctionnel polymérisable photochimiquement ou thermiquement est une double liaison C=C, hydroxy, époxy ou amino.

10. Matière hybride inorganique-organique selon l'une des revendications 1 à 9, **caractérisée en ce que** la matière hybride, par rapport au poids sec total, comprend 10 à 80 % en poids, de préférence 20 à 40 % en poids, de polymère soluble.

11. Matière hybride inorganique-organique selon l'une des revendications 1 à 10, **caractérisée en ce que** le ligand comprend au moins un groupe fonctionnel polymérisable photochimiquement.

12. Matière hybride inorganique-organique selon l'une des revendications 1 à 11, **caractérisée en ce que** la matière hybride, par rapport au poids sec total, comprend 0,1 à 30 % en poids et de préférence 1 à 20 % en poids d'un plastifiant.

13. Matière hybride inorganique-organique selon l'une des revendications 1 à 12, **caractérisée en ce que** la matière hybride, par rapport au poids sec total, comprend 0 à 5 % en poids d'un initiateur de polymérisation ou de réticulation thermique et/ou photochimique.

14. Matière hybride inorganique-organique selon l'une des revendications 1 à 13, **caractérisée en ce que** les nanoparticules modifiées en surface sont constituées de TiO₂, ZrO₂, Nb₂O₅ et Ta₂O₅.

15. Matière hybride inorganique-organique selon l'une des revendications 1 à 14, **caractérisée en ce que** les particules nanoscalaires modifiées en surface comprennent des groupes superficiels polymérisables, en particulier des groupes (méth)acryliques, allyliques, vinyliques, époxy, hydroxy, carboxy ou amino.

16. Procédé de production d'un composant optique, **caractérisé en ce que**
a) une matière hybride inorganique-organique selon l'une des revendications 1 à 15 est appliquée sur un substrat ou placée dans ou sur un outil de formage,
b) la matière hybride est le cas échéant séchée afin de devenir solide ou visqueuse,
c) la matière hybride solide ou visqueuse est irradiée selon un motif ou chauffée pour produire un gradient d'indice de réfraction dans la matière hybride, et
d) la matière hybride est totalement durcie thermiquement et/ou photochimiquement en fixant le gradient d'indice de réfraction.

17. Procédé selon la revendication 16, **caractérisé en ce que** l'irradiation selon un motif de l'étape c) s'effectue à une température élevée de 30 à 90 °C, de préférence de 50 à 70 °C.

18. Procédé selon la revendication 16 ou la revendication 17, **caractérisé en ce que** la matière hybride est appliquée sur un film plastique transparent et, le cas échéant, un film de couverture transparent est stratifié sur la couche hybride le cas échéant séchée.

19. Procédé selon l'une des revendications 16 à 18, **caractérisé en ce que** l'irradiation selon un motif est réalisée par holographie, lithographie ou irradiation locale.

20. Procédé selon l'une des revendications 16 à 19, **caractérisé en ce qu'**un gradient d'indice de réfraction est produit dans la couche hybride perpendiculairement à la direction de l'irradiation.

21. Procédé selon l'une des revendications 16 à 20, **caractérisé en ce qu'**un gradient d'indice de réfraction est produit perpendiculairement à la direction de l'irradiation avec une résolution latérale élevée dans la matière hybride inorganique-organique par irradiation locale.

22. Procédé selon l'une des revendications 16 à 21, **caractérisé en ce que** la couche hybride obtenue est déstratifiée du substrat pour obtenir la couche hybride sous forme de film ou de plaque.

23. Composant optique pouvant être obtenu selon un procédé des revendications 16 à 22.

24. Composant optique selon la revendication 23, **caractérisé en ce qu'**il s'agit d'un substrat revêtu ou une pièce moulée.

25. Composant optique selon la revendication 23 ou 24, **caractérisé en ce qu'**il présente une couche hybride transparente ou translucide avec des gradients d'indice de réfraction.

26. Composant optique selon l'une des revendications 23 à 25, **caractérisé en ce qu'**il s'agit d'un film à gradients d'indice de réfraction.

27. Composant optique selon la revendication 26, **caractérisé en ce que** le film à gradients d'indice de réfraction comprend un ou plusieurs films plastiques transparents qui sont revêtus d'une matière hybride dans laquelle il existe un gradient d'indice de réfraction ou qui en est essentiellement constitué.

28. Utilisation d'un composant optique selon l'une des revendications 23 à 27 dans les éléments optiques formant une image, pour des composants optiques déviant la lumière ou pour l'enregistrement de données holographique.
